(19) Europäisches Patentamt
European Patent Office
Office européen des brevets

(11) **EP 4 498 738 A1**

(12) **EUROPEAN PATENT APPLICATION**
published in accordance with Art. 153(4) EPC

(43) Date of publication:
**29.01.2025 Bulletin 2025/05**

(21) Application number: **23773720.0**

(22) Date of filing: **17.03.2023**

(51) International Patent Classification (IPC):
*H04W 56/00* (2009.01)

(52) Cooperative Patent Classification (CPC):
**H04L 7/00; H04W 56/00**

(86) International application number:
**PCT/CN2023/082123**

(87) International publication number:
**WO 2023/179472 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.03.2022 CN 202210283848**

(71) Applicant: **VIVO MOBILE COMMUNICATION CO., LTD.**
**Dongguan, Guangdong 523863 (CN)**

(72) Inventors:
• QU, Xin
Dongguan, Guangdong 523863 (CN)
• SHEN, Xiaodong
Dongguan, Guangdong 523863 (CN)
• PAN, Xueming
Dongguan, Guangdong 523863 (CN)
• YING, Zuolong
Dongguan, Guangdong 523863 (CN)

(74) Representative: **Lavoix**
**Bayerstraße 83**
**80335 München (DE)**

(54) **INFORMATION SENDING METHOD, INFORMATION RECEIVING METHOD, SENDING END, AND RECEIVING END**

(57) This application relates to the field of communication technologies, and discloses an information sending method, an information receiving method, a sending end, and a receiving end. The information sending method in embodiments of this application includes the following step: A sending end sends a beacon signal. The beacon signal includes target information. The target information is used for indicating relative time information of the beacon signal.

Start

A sending end sends a beacon signal, where the beacon signal includes target information, and the target information is used for indicating relative time information of the beacon signal — 101

End

FIG. 2

EP 4 498 738 A1

# Description

## CROSS-REFERENCE TO RELATED APPLICATION

This application claims priority to Chinese Patent Application No. 202210283848.4 filed in China on March 21, 2023, which is incorporated herein by reference in its entirety.

## TECHNICAL FIELD

This application relates to the field of communication technologies, and in particular, to an information sending method, an information receiving method, a sending end, and a receiving end.

## BACKGROUND

The 3GPP starts research in introducing a low power wake-up receiver/wake-up signal (Low Power Wake-Up Receiver /Wake-Up Signal, LP WUR/WUS) into a mobile cellular system. A basic operating principle of the LP WUR is as follows: A receiving end includes a first module and a second module, the first module is a primary communication module, and is configured to receive communication data transmitted by a sending end and send communication data, and the second module is a low power module, and may be configured to receive a beacon signal (which is also referred to as a low power beacon signal) sent by the sending end.

Currently, the receiving end achieves time synchronization with the sending end through absolute time information carried in the beacon signal sent by the sending end. However, since the absolute time information is relatively complex, it is relatively difficult to decode the beacon signal.

## SUMMARY

Embodiments of this application provide an information sending method, an information receiving method, a sending end, and a receiving end, which can resolve a problem that it is relatively difficult to decode a beacon signal.

According to a first aspect, an information sending method is provided. The method includes the following step:

A sending end sends a beacon signal.

The beacon signal includes target information. The target information is used for indicating relative time information of the beacon signal.

According to a second aspect, an information receiving method is provided. The method includes the following step:

A receiving end receives a beacon signal.

The beacon signal includes target information. The target information is used for indicating relative time information of the beacon signal.

According to a third aspect, an information sending apparatus is provided. The apparatus includes: a sending module, configured to send a beacon signal.

The beacon signal includes target information. The target information is used for indicating relative time information of the beacon signal.

According to a fourth aspect, an information receiving apparatus is provided. The apparatus includes: a receiving module, configured to receive a beacon signal.

The beacon signal includes target information. The target information is used for indicating relative time information of the beacon signal.

According to a fifth aspect, a sending end is provided. The sending end includes a processor and a memory. The memory stores a program or instructions executable in the processor. The program or the instructions, when executed by the processor, implement the steps of the method described in the first aspect.

According to a sixth aspect, a sending end is provided. The sending end includes a processor and a communication interface. The communication interface is configured to send a beacon signal. The beacon signal includes target information. The target information is used for indicating relative time information of the beacon signal.

According to a seventh aspect, a receiving end is provided. The receiving end includes a processor and a memory. The memory stores a program or instructions executable in the processor. The program or the instructions, when executed by the processor, implement the steps of the method described in the second aspect.

According to an eighth aspect, a receiving end is provided. The receiving end includes a processor and a communication interface. The processor is configured to receive a beacon signal. The beacon signal includes target information. The target information is used for indicating relative time information of the beacon signal.

According to a ninth aspect, an information transceiving system is provided. The information transceiving system includes a sending end and a receiving end. The sending end may be configured to perform the steps of the information sending method described in the first aspect. The receiving end may be configured to perform the steps of the information receiving method described in the second aspect.

According to a tenth aspect, a readable storage medium is provided. The readable storage medium stores a program or instructions. The program or the instructions, when executed by a processor, implement the steps of the method described in the first aspect or the second aspect.

According to an eleventh aspect, a chip is provided. The chip includes a processor and a communication interface. The communication interface is coupled to the processor. The processor is configured to execute a program or instructions to implement the method described in the first aspect or the second aspect.

According to a twelfth aspect, a computer program/program product is provided. The computer program/program product is stored in a storage medium. The computer program/program product is executed by at least one processor, to implement the steps of the information sending method described in the first aspect, or implement the steps of the information receiving method described in the second aspect.

In embodiments of this application, the sending end sends the beacon signal, where the beacon signal includes target information, and the target information is used for indicating relative time information of the beacon signal. Through transmitting time information by the relative time information in the beacon signal, complexity of the information transmission can be reduced, difficulty in decoding the beacon signal can be reduced, a load of the beacon signal can be reduced, and signaling overheads of the beacon signal can be reduced.

## BRIEF DESCRIPTION OF THE DRAWINGS

FIG. 1 is a block diagram of a wireless communication system to which embodiments of this application may be applied;

FIG. 2 is a flowchart of an information sending method according to an embodiment of this application;

FIG. 3 is a schematic structural diagram I of a terminal according to an embodiment of this application;

FIG. 4 is a schematic structural diagram I of a beacon signal according to an embodiment of this application;

FIG. 5 is a schematic structural diagram II of a beacon signal according to an embodiment of this application;

FIG. 6 is a schematic structural diagram III of a beacon signal according to an embodiment of this application;

FIG. 7 is a flowchart of an information receiving method according to an embodiment of this application;

FIG. 8 is a structural diagram of an information sending apparatus according to an embodiment of this application;

FIG. 9 is a structural diagram of an information receiving apparatus according to an embodiment of this application;

FIG. 10 is a structural diagram of a communication device according to an embodiment of this application;

FIG. 11 is a schematic structural diagram of a terminal according to an embodiment of this application; and

FIG. 12 is a schematic structural diagram of a network side device according to an embodiment of this application.

## DETAILED DESCRIPTION

Technical solutions in embodiments of this application are clearly described below with reference to drawings in embodiments of this application. Apparently, the described embodiments are merely some rather than all embodiments of this application. All other embodiments obtained by a person of ordinary skill in the art based on embodiments of this application fall within the protection scope of this application.

Terms "first", "second", and the like in the specification and the claims of this application are used for distinguishing between similar objects, and are not used for describing a specific order or sequence. It should be understood that the terms used in this way may be transposed where appropriate, so that embodiments of this application may be implemented in a sequence other than those illustrated or described herein. In addition, objects defined by "first" and "second" are generally of the same class and do not limit a quantity of objects. For example, one or more first objects may be arranged. In addition, "and/or" in the specification and the claims indicates at least one of connected objects, and a character "/" generally indicates an "or" relationship between associated objects.

It should be noted that, technologies described in embodiments of this application may be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. The terms "system" and "network" in embodiments of this application are usually interchangeably used, and the technology described may be used for both the systems and radio technologies mentioned above, as well as for another system and radio technology. A new radio (New Radio, NR) system is described below for an illustrative purpose, and the term NR is used in most of the following descriptions, although the technologies may be applied to applications other than applications of the NR system, such as a 6th Generation (6th Generation, 6G) communication system.

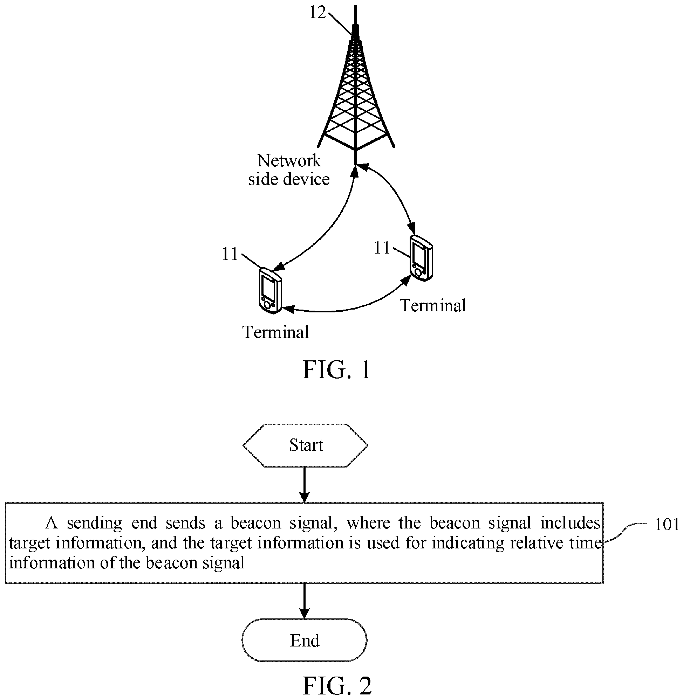

FIG. 1 is a block diagram of a wireless communication system to which embodiments of this application may be applied. The wireless communication system includes a terminal 11 and a network side device 12. The terminal 11 may be a terminal side device such as a mobile phone, a tablet computer (Tablet Personal Computer), a laptop computer (Laptop Computer), which is also referred to as a notebook computer, a personal digital assistant (Personal Digital Assistant, PDA), a palm computer, a netbook, an ultra-mobile personal computer (Ultra-Mobile Personal Computer, UMPC), a mobile internet device (Mobile Internet Device, MID), an augmented reality (augmented reality, AR)/virtual reality (virtual reality, VR) device, a robot, a wearable device (Wearable Device), an on-board device (VUE), a pedestrian user equipment (PUE), smart home (a home device with a wireless communication capability, such as a refrigerator, a television, a washing machine, or furniture), a game console, a personal computer (personal computer, PC), a teller machine, or a self-service machine. The wearable device includes a smart watch, a smart bracelet, a smart headset, smart glasses, smart jewelry (a smart bracelet, a smart chain bracelet, a smart ring, a smart necklace, a smart ankle bangle, a smart ankle chain, and the like), a smart wristband, smart clothing, and the like. It should be noted that, a specific type of the terminal 11 is not limited in embodiments of this application. The network side device 12 may include an access network device or a core network device. The access network device 12 may also be referred to as a wireless access network device, a radio access network (Radio Access Network, RAN), a wireless access network function, or a wireless access network unit. The access network device 12 may include a base station, a WLAN access point, a Wi-Fi node, and the like. The base station may be referred to as a NodeB, an evolved NodeB (eNB), an access point, a base transceiver station (Base Transceiver Station, BTS), a radio base station, a radio transceiver, a basic service sets (Basic Service Set, BSS), an extended service set (Extended Service Set, ESS), a household NodeB, a household evolved NodeB, a transmitting receiving point (Transmitting Receiving Point, TRP), or some other appropriate term in the field, as long as the same technical effect is achieved. The base station is not limited to a specific technical term. It should be noted that, in embodiments of this application, only a base station in the NR system is used as an example, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), an network exposure function (Network Exposure Function, NEF), a local NEF (Local NEF, or L-NEF), a binding support function (Binding Support Function, BSF), an application function (Application Function, AF), and the like. It should be noted that, in embodiments of this application, only a core network device in the NR system is used as an example, but the specific type of the core network device is not limited.

An information sending method, an information receiving method, a sending end, and a receiving end provided in embodiments of this application are described below in detail through some embodiments and application scenarios with reference to the drawings.

Referring to FIG. 2, FIG. 2 is a flowchart of an information sending method according to an embodiment of this application. As shown in FIG. 2, the information sending method includes the following step.

Step 101: A sending end sends a beacon signal, where

the beacon signal includes target information, and the target information is used for indicating relative time information of the beacon signal.

In addition, the relative time information of the beacon signal may be time information relative to a target time point. The target time point may be determined through network configuration or pre-configuration. Absolute time information may be determined through the target time point and the relative time information, to achieve time synchronization of a receiving end with the sending end.

In an implementation, the target time point may be used as a starting position of the first beacon period of the beacon signal.

In an implementation, the sending end may periodically send the beacon signal.

In an implementation, the beacon signal is a low power beacon signal.

In an implementation, the target information may include at least one of the following:

an identifier of the beacon signal in a beacon period;
an identifier of the beacon period;
a parameter of the beacon period;
a parameter of the beacon signal;
an identifier of the sending end; and
a transmission parameter.

It should be noted that, the beacon signal may be used for providing time reference information and/or information other than the time reference information. The beacon signal may be further used for link management.

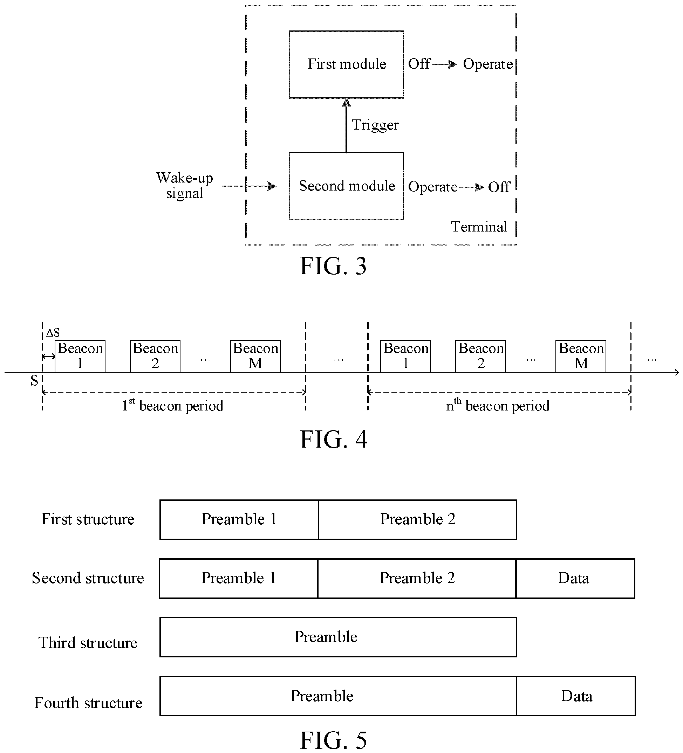

It should be noted that, the receiving end may be a terminal. The terminal includes a first module and a second module. The first module is a primary communication module, and is configured to receive communication data transmitted by the sending end and send communication data. The second module is a low power module, and may be configured to receive a wake-up signal (which may also be referred to as a low power wake-up signal) sent by the sending end. The wake-up signal is used for waking up the primary communication module of the receiving end. As shown in FIG. 3, when the first module is not waken up by the second module, the first module is always in an off state, and does not send or receive data. When downlink data arrives, the second module detects the wake-up signal sent by the sending end, and the wake-up signal includes information about the terminal, the second module triggers the first module to switch from the off state to an operating state, to perform data receiving and sending. The second module may be continuously or discontinuously on. When the second module is on, the second module may receive the low power wake-up signal and the beacon signal (which may also be referred to as a low power beacon signal).

In an implementation, the beacon signal may provide a time reference for the wake-up signal. The target information may include the identifier of the beacon period. When the identifier of the beacon period is detected as a first preset value, detection of the wake-up signal may start. Alternatively, the target information may include the identifier of the beacon signal in the beacon period. When the identifier of the beacon signal in the beacon period is detected as a second preset value, the detection of the wake-up signal may start. Alternatively, the target information may include the identifier of the beacon period and the identifier of the beacon signal in the beacon period. When the identifier of the beacon period is detected as the first preset value and the identifier of the beacon signal in the beacon period is detected as the second preset value, the detection of the wake-up signal may start. Alternatively, the target information may include the identifier of the beacon period and the identifier of the beacon signal in the beacon period. A starting time position of each beacon signal in each beacon period may be determined based on the identifier of the beacon period and the identifier of the beacon signal in the beacon period. A moment at which the wake-up signal is to be detected may be determined based on a starting time position of a beacon signal in a beacon period. Only some example descriptions of the beacon signal providing the time reference for the wake-up signal are described above. Other implementations are also applicable to embodiments of the present invention, and are not enumerated in this embodiment.

In embodiments of this application, the sending end sends the beacon signal, where the beacon signal includes target information, and the target information is used for indicating relative time information of the beacon signal. Through transmitting time information by the relative time information in the beacon signal, complexity of the information transmission can be reduced, difficulty in decoding the beacon signal can be reduced, a load of the beacon signal can be reduced, and signaling overheads of the beacon signal can be reduced.

Optionally, the target information may indicate the relative time information of the beacon signal through at least one of the following:

the identifier of the beacon signal in the beacon period; and
the identifier of the beacon period.

The sending end may periodically send the beacon signal. Each beacon period includes a plurality of beacon signals. The identifier of the beacon signal in the beacon period may be an identifier of the beacon signal in one beacon period, for example, may be a number of the beacon signal in one beacon period. As shown in FIG. 4, the periodic beacon signal includes N beacon periods. Each beacon period includes M beacon signals. A starting position of the beacon period is denoted as S. A time offset in the beacon period is denoted as $\Delta S$. N and M are both positive integers.

In addition, the identifier of the beacon period may be a number of the beacon period.

In an implementation, the target information includes the identifier m of the beacon signal in the beacon period and the identifier n of the beacon period. m and n are both positive integers. The following configuration information may be obtained through receiving of high-level signaling by the primary communication module or may be pre-configured: the starting position S of the beacon period, the time offset $\Delta S$, a period length P, a beacon signal length L, and a time interval G between adjacent beacon signals in the beacon period. In this way, a starting time position of an $m^{th}$ beacon signal in an $n^{th}$ beacon period may be determined as follows through the relative time information:

$$(n-1) * P + S + \Delta S + (m-1) * (L+G).$$

In an implementation, the target information may include the identifier of the beacon period. Through detection of beacon signals of at least two beacon periods, an identifier of the first beacon signal of which the identifier of the beacon period changes can be determined. Through counting of beacon signals, the identifier of the beacon signal in the beacon period can be determined.

In an implementation, the target information may include the identifier of the beacon signal in the beacon period. The identifier of the beacon period may be obtained through receiving of high-level signaling by the primary communication module, or the beacon period may be set to 1.

It should be noted that, transmission of the time information through periodical sending of the beacon signal can maintain synchronization of a low power wake-up receiver, that is, the receiving end with the sending end. In the related art, information of a total of 12 bits [5:16] of 64 bits of a timer synchronization function (Timer Synchronization Function, TSF) timer (timer) of the sending end may be carried in a beacon signal. After receiving the information of 12 bits, the receiving end updates a local TSF timer based on a defined time updating rule, to achieve synchronization with the sending end. The beacon (beacon) signal carrying the TSF information of the sending end is sent, and the receiving end updates the local TSF timer based on the received TSF information, so that a TSF timer of the receiving end remains consistent with that of the sending end. However, sending the beacon carrying the TSF information requires a large amount of signaling overheads and large decoding power consumption of the receiving end.

In this embodiment, a time reference may be provided for receiving of a wake-up signal or another signal through the identifier of the beacon signal in the beacon period and/or the identifier of the beacon period. In this way, the signaling overheads can be reduced, and the power consumption of the receiving end can be reduced.

Optionally, the target information further includes at least one of the following:

    a starting position of the beacon period;
    a length of the beacon period;
    a quantity of beacon signals included in the beacon period;
    a time interval between adjacent beacon signals in the beacon period;
    a time offset in the beacon period;
    a length of the beacon signal;
    an identifier of the sending end; and
    a transmission parameter.

The starting position of the beacon period may be a starting position of one beacon period, for example, may include the starting position of the first beacon period. The length of the beacon period may be a length of one beacon period, for example, may be a duration of one beacon period. The quantity of beacon signals included in the beacon period may be a quantity of beacon signals included in one beacon period. The time interval between adjacent beacon signals in the beacon period may be a time interval between adjacent beacon signals in one beacon period. The time offset in the beacon period may be a time offset in one beacon period.

An example in which the target information includes the parameter of the beacon period and the parameter of the beacon period includes the time offset $\Delta S$ in the beacon period is used. The receiving end may obtain the following configuration information through receiving of the high-level signaling by the primary communication module or pre-configure the following configuration information: the starting position S of the beacon period, the period length P, the beacon signal length L, and the time interval G between adjacent beacon signals in the beacon period. In this way, the starting time position of the $m^{th}$ beacon signal in the $n^{th}$ beacon period may be determined as follows:

$$(n-1)*P + S + \Delta S + (m-1)*(L+G).$$

The length of the beacon signal may be a length of one beacon signal.

The identifier of the sending end may be used for identifying the sending end. For example, the identifier of the sending end may be used for uniquely identifying the sending end.

In this implementation, the parameter of the beacon period includes at least one of the following: the starting position of the beacon period; the length of the beacon period; the quantity of beacon signals included in the beacon period; the time interval between adjacent beacon signals in the beacon period; the time offset in the beacon period; the length of the beacon signal; the identifier of the sending end; and the transmission parameter. In this way, a time reference may be provided for the receiving of the wake-up signal through the relative time information in the beacon signal, so that continuous detection of the wake-up signal is not needed, thereby reducing the power consumption of the receiving end.

Optionally, the transmission parameter includes a data unit length of data information in the beacon signal. In this way, the data unit length of the data part in the beacon signal can be obtained through the transmission parameter.

Optionally, the beacon signal includes a preamble. The preamble carries at least one item of the target information.

Alternatively, the beacon signal includes the preamble and the data information. The preamble carries a first part of the target information, and the data information carries a second part of the target information.

In this implementation, the preamble may include a $1^{st}$ stage preamble, or the preamble may include a $1^{st}$ stage preamble and a $2^{nd}$ stage preamble.

Optionally, the beacon signal includes one of the following:

    a first beacon signal including a $1^{st}$ stage preamble and a $2^{nd}$ stage preamble;
    a second beacon signal including the $1^{st}$ stage preamble, the $2^{nd}$ stage preamble, and data information;
    a third beacon signal including the $1^{st}$ stage preamble; and
    a fourth beacon signal including the $1^{st}$ stage preamble and the data information.

It should be noted that, the data information in the beacon signal may be the data part.

It should be noted that, when the beacon signal includes only the $1^{st}$ stage preamble, the $1^{st}$ stage preamble may be directly referred to as a preamble.

It should be noted that, the first beacon signal may be a beacon signal of a first structure, the second beacon signal may be a beacon signal of a second structure, the third beacon signal may be a beacon signal of a third structure, and the fourth beacon signal may be a beacon signal of a fourth structure.

In an implementation, as shown in FIG. 5, the beacon signal of the first structure includes the 1st stage preamble (that is, a preamble 1) and the 2nd stage preamble (that is, a preamble 2) in sequence. The beacon signal of the second structure includes the 1st stage preamble, the 2nd stage preamble, and the data part in sequence. The beacon signal of the third structure includes the preamble. The beacon signal of the fourth structure includes the preamble and the data part in sequence.

In this implementation, a structural design of the beacon signal can be achieved through the beacon signal of the first structure, or the second structure, or the third structure, or the fourth structure.

Optionally, the first beacon signal, the second beacon signal, the third beacon signal, or the fourth beacon signal further includes a delimiter. The delimiter is arranged before the 1st stage preamble.

The delimiter may be used for indicating that a signal at which the delimiter is located is a beacon signal, that is, may be used for indicating a signal type of the beacon signal.

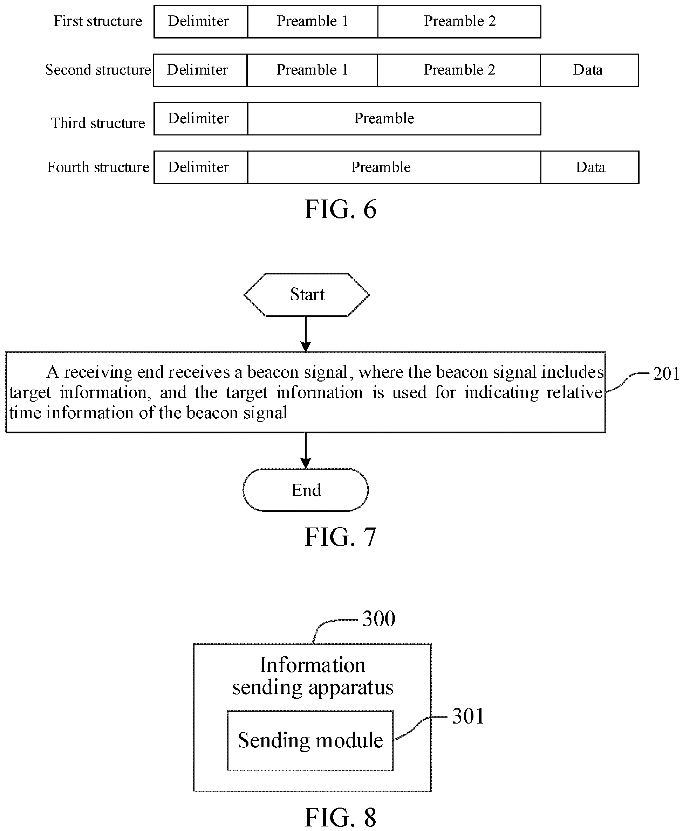

In an implementation, as shown in FIG. 6, in a case that the beacon signal further includes the delimiter,

the beacon signal of the first structure includes the delimiter, the 1st stage preamble (that is, the preamble 1) and the 2nd stage preamble (that is, the preamble 2) in sequence;
the beacon signal of the second structure includes the delimiter, the 1st stage preamble, the 2nd stage preamble, and the data information in sequence;
the beacon signal of the third structure includes the delimiter and the 1st stage preamble; and
the beacon signal of the fourth structure includes the delimiter, the 1st stage preamble, and the data information in sequence.

When the beacon signal includes only the 1st stage preamble, the 1st stage preamble may be directly referred to as a preamble.

In an implementation, the delimiter may be detected through at least one of the following methods:

determining a jump from a high level to a low level;
determining a jump from the low level to the high level;
determining a duration of the high level; and
determining a duration of the low level.

In this implementation, the delimiter is arranged, so that the receiving end can determine that a received signal is a beacon signal without performing sequence detection.

Optionally, the first beacon signal carries the first part of the target information in the 1st stage preamble, and carries the second part of the target information in the 2nd stage preamble, and the first part does not overlap the second part.

Alternatively,
the second beacon signal carries the first part of the target information in the 1st stage preamble, carries the second part of the target information in the 2nd stage preamble, and carries a third part of the target information in the data information, and the first part, the second part, and the third part do not overlap each other.

Alternatively,
the third beacon signal carries the first part of the target information in the 1st stage preamble.

Alternatively,
the fourth beacon signal carries the first part of the target information in the 1st stage preamble, and carries the second part of the target information in the data information, and the first part does not overlap the second part.

The first part may include at least one item of the target information, or the first part may be null. The second part may include at least one item of the target information. The third part may include at least one item of the target information.

In an implementation, in the beacon signal of the first structure, the 2nd stage preamble carries first information, where the first information includes at least one item of the target information not carried in the 1st stage preamble;
and/or

in the beacon signal of the second structure, the 2nd stage preamble carries second information, and the data information carries third information, where the second information includes at least one item of the target information not carried in the 1st stage preamble, and the third information includes at least one item of the target information not carried in the 1st stage preamble and the 2nd stage preamble;
and/or
in the beacon signal of the third structure, the 1st stage preamble carries at least one item of the target information;
and/or
in the beacon signal of the fourth structure, the 1st stage preamble carries at least one item of the target information, and the data information carries fourth information, where the fourth information includes at least one item of the target information not carried in the 1st stage preamble.

In the beacon signal of the first structure, the 1st stage preamble may carry at least one item of the target information, or may not carry the target information. In the beacon signal of the second structure, the 1st stage preamble may carry at least one item of the target information, or may not carry the target information.

In this implementation, the 1st stage preamble and/or the 2nd stage preamble carries the target information, to carry the relative time information in the preamble of the beacon signal. Compared with explicit indication of time information, overheads and complexity of decoding and extracting the time information by the receiving end can be reduced, and a failure of obtaining timing information as a result of the receiving end failing to decode the data part of the beacon signal can be avoided.

The information sending information in embodiments of this application is described in detail through the following three embodiments:

Embodiment 1:

The sending end periodically sends a beacon signal. The beacon signal is a low power beacon signal.

A starting time position of the first beacon period, that is, a starting position of the beacon period, is defined as S, a length of the beacon period is defined as P, a quantity of beacon signals included in each beacon period is defined as M, a length of each beacon signal is defined as L, a time interval between adjacent beacon signals in one beacon period, that is, a time interval between adjacent beacon signals in the beacon period is defined as G, and a time offset of a starting position of the first beacon signal in each beacon period relative to a starting position of the beacon period in which the first beacon signal is located, that is, a time offset in the beacon period is defined as $\Delta S$. The time offset $\Delta S$ may be 0.

As shown in FIG. 4, a starting time position of an $n^{th}$ beacon period is $(n-1)*P+S$, and a starting time position of an $m^{th}$ beacon signal in the $n^{th}$ beacon period is $(n - 1) * P + S + \Delta S + (m - 1) * (L+G)$.

The receiving end receives configuration information of the beacon signal, including the starting position S of the beacon period, the time offset $\Delta S$, the period length P, the quantity M of beacon signals included in each beacon period, the beacon signal length L, and the time interval G between adjacent beacon signals in the beacon period. The receiving end may obtain the configuration information of the beacon signal through receiving of high-level signaling by the primary communication module, and/or receive the configuration information of the beacon signal through the low power module, and/or pre-configure the configuration information of the beacon signal through a system. The starting position S of the beacon period may be determined in another manner other than the indication in the configuration information. For example, during first beacon signal detection, the receiving end uses a blind detection method. The receiving end performs sequence detection on a preamble included in the beacon signal, obtains, after successfully detecting the preamble and identifying a beacon signal, a number of the beacon signal in a beacon period and a number of the beacon period in which the beacon signal is located, and then determines the starting position S of the beacon period based on the time offset $\Delta S$, the period length P, the quantity M of beacon signals included in each beacon period, the beacon signal length L, and the time interval G between adjacent beacon signals in the beacon period.

When the receiving end obtains the configuration information of the beacon signal through the receiving of the high-level signaling by the primary communication module, the high-level signaling may be carried through a physical downlink shared channel (Physical downlink shared channel, PDSCH).

In addition, when the receiving end receives the configuration information of the beacon signal through the low power module, the configuration information may be carried in a data part of the beacon signal, such as the beacon signal of the second structure and the beacon signal of the fourth structure.

Optionally, the receiving end periodically receives the beacon signal. At least one receiving end receives the same beacon signal from the sending end.

Optionally, the sending end periodically sends the beacon signal. The beacon signal carries at least one of the following information:

an identifier of the beacon signal in a beacon period;
an identifier of the beacon period;
the identifier of the sending end; and
a transmission parameter.

Optionally, the beacon signal may further carry at least one of the following information:

a starting position of the beacon period;
a length of the beacon period;
a quantity of beacon signals included in the beacon period;
a length of the beacon signal;
a time interval between adjacent beacon signals in the beacon period;
a time offset in the beacon period.

Embodiment 2:

The configuration information of the beacon signal includes the starting position S of the beacon period, the time offset $\Delta S$, the period length P, the quantity M of beacon signals included in each beacon period, the beacon signal length L, and the time interval G between adjacent beacon signals in the beacon period. In a case that the receiving end obtains the configuration information of the beacon signal through the receiving of the high-level signaling by the primary communication module, or determines the configuration information of the beacon signal through system pre-configuration, a structure of the beacon signal may be any of the following:
the first structure, the second structure, the third structure, and the fourth structure.

The beacon signal of the first structure includes

the 1st stage preamble and the 2nd stage preamble in sequence.

The beacon signal of the second structure includes the 1st stage preamble, the 2nd stage preamble, and the data part in sequence.

The beacon signal of the third structure includes the 1st stage preamble.

The beacon signal of the fourth structure includes the 1st stage preamble and the data part in sequence.

In the beacon signal of the first structure, the 1st stage preamble does not carry the target information, or carries at least one item of the target information, and the 2nd stage preamble carries at least one item of the target information not carried in the 1st stage preamble.

In the beacon signal of the second structure, the 1st stage preamble does not carry the target information, or carries at least one item of the target information, the 2nd stage preamble carries at least one item of the target information not carried in the 1st stage preamble, and the data information carries at least one item of the target information not carried in the 1st stage preamble and the 2nd stage preamble.

In the beacon signal of the third structure, the 1st stage preamble carries at least one item of target information.

In the beacon signal of the fourth structure, the 1st stage preamble carries at least one item of the target information, and the data part carries at least one item of the target information not carried in the 1st stage preamble.

Optionally, the target information includes:

a number of the beacon signal in the beacon period;
a number of the beacon period in which the beacon signal is located;
the identifier of the sending end; and
the transmission parameter.

In an implementation, a method for carrying information in the preamble is as follows: Different values of the information are allocated to different sets, and the values are indicated by a plurality of preambles. For example, the preamble carries information 1 and information 2, the information 1 includes a value 1 and a value 2, and the information 2 includes a value a and a value b. Therefore, an information set 1 is represented as {information 1 value 1, information 2 value a}, an information set 2 is represented as {information 1 value 2, information 2 value a}, an information set 3 is represented as {information 1 value 1, information 2 value b}, and information set 4 is represented as {information 1 value 2, information 2 value b}. In this way, preambles 1 to 4 may be used for indicating the information sets 1 to 4. The preamble may be a sequence with a specially designed length. When the beacon signal is used for on-off keying (On-Off Keying, OOK) modulation, a value of each element in the sequence is 0 or 1. The above preamble may

be a 1st stage preamble and/or a 2nd stage preamble.

It should be noted that, after successfully detecting the preamble and successfully decoding the beacon signal, the receiving end may obtain a number of the beacon signal in a beacon period and a number of the beacon period in which the beacon signal is located, and then determine a starting position S of the beacon period based on the time offset $\Delta S$, the period length P, the quantity M of beacon signals included in each beacon period, the beacon signal length L, and the time interval G between adjacent beacon signals in the beacon period. The receiving end may use the starting position S as a reference position for determining a time domain position of another signal.

Embodiment 3:

The receiving end receives the configuration information of the beacon signal through the low power module. The configuration information of the beacon signal includes the starting position S of the beacon period, the time offset $\Delta S$, the period length P, the quantity M of beacon signals included in each beacon period, the beacon signal length L, and the time interval G between adjacent beacon signals in the beacon period.

The target information includes:

the identifier of the beacon signal in the beacon period; and
the identifier of the beacon period;
the identifier of the sending end;
the transmission parameter;
the starting position of the beacon period;
the length of the beacon period;
the quantity of beacon signals included in the beacon period;
the length of the beacon signal; and
the time offset in the beacon period.

A structure of the beacon signal is one of the following:
the first structure, the second structure, the third structure, and the fourth structure.

In the beacon signal of the first structure, the 1st stage preamble does not carry the target information, or carries at least one item of the target information, and the 2nd stage preamble carries at least one item of the target information not carried in the 1st stage preamble.

In the beacon signal of the second structure, the 1st stage preamble does not carry the target information, or carries at least one item of the target information, the 2nd stage preamble carries at least one item of the target information not carried in the 1st stage preamble, and the data part carries at least one item of the target information not carried in the 1st stage preamble and the 2nd stage preamble.

In the beacon signal of the third structure, the 1st stage preamble carries at least one item of target information.

In the beacon signal of the fourth structure, the 1st stage preamble carries at least one item of the target information, and the data part carries at least one item of the target information not carried in the 1st stage preamble.

In an implementation, a method for carrying information in the preamble is as follows: Different values of the information are allocated to different sets, and the values are indicated by a plurality of preambles. For example, the preamble carries information 1 and information 2, the information 1 includes a value 1 and a value 2, and the information 2 includes a value a and a value b. Therefore, an information set 1 is represented as {information 1 value 1, information 2 value a}, an information set 2 is represented as {information 1 value 2, information 2 value a}, an information set 3 is represented as {information 1 value 1, information 2 value b}, and information set 4 is represented as {information 1 value 2, information 2 value b}. In this way, preambles 1 to 4 may be used for indicating the information sets 1 to 4. The preamble may be a sequence with a specially designed length. When the beacon signal is used for OOK modulation, a value of each element in the sequence is 0 or 1. The above preamble may be a 1st stage preamble and/or a 2nd stage preamble.

In an implementation, a method for carrying information in the preamble is as follows: Each information domain indicates information. The preamble may include a plurality of information domains, which are used for indicating a plurality of types of information. For example, the preamble may include an information domain 1 and an information domain 2 to respectively indicate information 1 and information 2. The information 1 includes a value 1 and a value 2, and the information 2 includes a value a and a value b. Therefore, the information domain 1 and the information domain 2 each may be indicated by 1 bit.

In an implementation, a method for carrying information in the data part of the beacon signal is as follows: Different values of the information are allocated to different sets, and the values are indicated by a plurality of bits. For example, the data part carries information 1 and information 2, the information 1 includes a value 1 and a value 2, and the information 2 includes a value a and a value b. Therefore, an information set 1 is represented as {information 1 value 1, information 2 value a}, an information set 2 is represented as {information 1 value 2, information 2 value a}, an information set 3 is represented as {information 1 value 1, information 2 value b}, and information set 4 is represented as {information 1 value 2, information 2 value b}. Therefore, the 4 information sets may be indicated by 2 bits.

In another implementation, a method for carrying information in the data part is as follows: Each information domain indicates information. The data part may include a plurality of information domains, which are used for indicating a plurality of types of information. For example, the data part may include an information domain 1 and an information domain 2 to respectively indicate information 1 and information 2. The information 1 includes a value 1 and a value 2, and the information 2 includes a value a and a value b. Therefore, the information domain 1 and the information domain 2 each may be indicated by 1 bit.

It should be noted that, after successfully detecting the preamble and successfully decoding the beacon signal, the receiving end may obtain a number of the beacon signal in a beacon period and a number of the beacon period in which the beacon signal is located, and then determine a starting position S of the beacon period based on the time offset $\Delta S$, the period length P, the quantity M of beacon signals included in each beacon period, the beacon signal length L, and the time interval G between adjacent beacon signals in the beacon period. The receiving end may use the starting position S as a reference position for determining a time domain position of another signal.

In the above embodiments, the starting position S of the beacon period may be determined in another manner other than the indication in the configuration information of the beacon signal.

In embodiments of this application, the beacon signal is sent periodically, and the relative time information is carried in the preamble of the beacon signal. Compared with explicit indication of time information, overheads and complexity of decoding and extracting the time information by the receiving end can be reduced.

Referring to FIG. 7, FIG. 7 is a flowchart of an information sending method according to an embodiment of this application. As shown in FIG. 7, the information sending method includes the following step.

Step 201: A receiving end receives a beacon signal, where
the beacon signal includes target information, and the target information is used for indicating relative time information of the beacon signal.

Optionally, the target information includes at least one of the following:

an identifier of the beacon signal in a beacon period; and
an identifier of the beacon period.

Optionally, the target information further includes at least one of the following:

a starting position of the beacon period;
a length of the beacon period;
a quantity of beacon signals included in the beacon period;
a time interval between adjacent beacon signals in the beacon period;
a time offset in the beacon period;
a length of the beacon signal;
an identifier of the sending end; and

a transmission parameter.

Optionally, the beacon signal includes one of the following:

a first beacon signal including a 1st stage preamble and a 2nd stage preamble;
a second beacon signal including the 1st stage preamble, the 2nd stage preamble, and data information;
a third beacon signal including the 1st stage preamble; and
a fourth beacon signal including the 1st stage preamble and the data information.

Optionally, the first beacon signal carries a first part of the target information in the 1st stage preamble, and carries a second part of the target information in the 2nd stage preamble, and the first part does not overlap the second part.

Alternatively,
the second beacon signal carries the first part of the target information in the 1st stage preamble, carries the second part of the target information in the 2nd stage preamble, and carries a third part of the target information in the data information, and the first part, the second part, and the third part do not overlap each other.

Alternatively,
the third beacon signal carries the first part of the target information in the 1st stage preamble.

Alternatively,
the fourth beacon signal carries the first part of the target information in the 1st stage preamble, and carries the second part of the target information in the data information, and the first part does not overlap the second part.

It should be noted that, this embodiment serves as the implementation of the receiving end corresponding to the embodiment shown in FIG. 2. For a specific implementation, refer to the relevant description in the embodiment shown in FIG. 2. To avoid repetition, details are not described in this embodiment. Through transmitting time information by the relative time information in the beacon signal, complexity of the information transmission can be reduced, difficulty in decoding the beacon signal can be reduced, a load of the beacon signal can be reduced, and signaling overheads of the beacon signal can be reduced.

The information sending method provided in embodiments of this application may be performed by an information sending apparatus. In embodiments of this application, an information sending apparatus provided in embodiments of this application is described by using an example in which the information sending apparatus performs the information sending method.

Referring to FIG. 8, FIG. 8 is a structural diagram of an information sending apparatus according to an embodiment of this application. As shown in FIG. 8, the information sending apparatus 300 includes:

a sending module 301, configured to send a beacon signal.

The beacon signal includes target information. The target information is used for indicating relative time information of the beacon signal.

Optionally, the target information includes at least one of the following:

an identifier of the beacon signal in a beacon period; and
an identifier of the beacon period.

Optionally, the target information further includes at least one of the following:

a starting position of the beacon period;
a length of the beacon period;
a quantity of beacon signals included in the beacon period;
a time interval between adjacent beacon signals in the beacon period;
a time offset in the beacon period;
a length of the beacon signal;
an identifier of the sending end; and
a transmission parameter.

Optionally, the transmission parameter includes a data unit length of data information in the beacon signal.

Optionally, a structure of the beacon signal includes one of the following:

a first beacon signal including a 1st stage preamble and a 2nd stage preamble;
a second beacon signal including the 1st stage preamble, the 2nd stage preamble, and data information;
a third beacon signal including the 1st stage preamble; and
a fourth beacon signal including the 1st stage preamble and the data information.

Optionally, the first beacon signal, the second beacon signal, the third beacon signal, or the fourth beacon signal further includes a delimiter. The delimiter is arranged before the 1st stage preamble.

Optionally, the first beacon signal carries a first part of the target information in the 1st stage preamble, and carries a second part of the target information in the 2nd stage preamble, and the first part does not overlap the second part.

Alternatively,
the second beacon signal carries the first part of the target information in the 1st stage preamble, carries the second part of the target information in the 2nd stage preamble, and carries a third part of the target information in the data information, and the first part, the second part, and the third part do not overlap each other.

Alternatively,
the third beacon signal carries the first part of the target information in the 1st stage preamble.

Alternatively,
the fourth beacon signal carries the first part of the target information in the 1st stage preamble, and carries the second part of the target information in the data information, and the first part does not overlap the second part.

According to the information sending apparatus in embodiments of this application, through transmitting time information by the relative time information in the beacon signal, complexity of the information transmission can be reduced, difficulty in decoding the beacon signal can be reduced, a load of the beacon signal can be reduced, and signaling overheads of the beacon signal can be reduced.

The information sending apparatus in embodiments of this application may be an electronic device, for example, an electronic device having an operating system, or may be a component in the electronic device, for example, an integrated circuit or a chip. The electronic device may be a terminal, or may be another device other than the terminal. In an example, the terminal may include but is not limited to the above listed types of the terminal 11, and the another device may be a server, a network attached storage (Network Attached Storage, NAS), or the like. This is not specifically limited in embodiments of this application.

The information sending apparatus provided in embodiments of this application can implement all of the processes implemented in the method embodiment of FIG. 2, and achieve the same technical effects. To avoid repetition, details are not described herein.

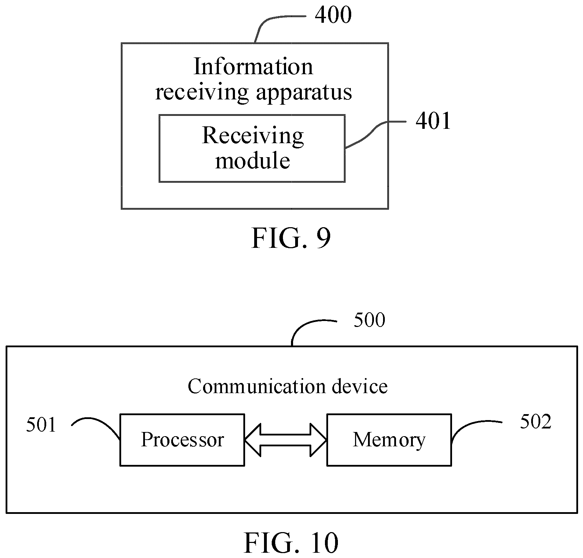

Referring to FIG. 9, FIG. 9 is a structural diagram of an information receiving apparatus according to an embodiment of this application. As shown in FIG. 9, the information receiving apparatus 400 includes:
a receiving module 401, configured to receive a beacon signal.

The beacon signal includes target information. The target information is used for indicating relative time information of the beacon signal.

Optionally, the target information includes at least one of the following:

an identifier of the beacon signal in a beacon period; and
an identifier of the beacon period.

Optionally, the target information further includes at least one of the following:

a starting position of the beacon period;
a length of the beacon period;
a quantity of beacon signals included in the beacon period;
a time interval between adjacent beacon signals in the beacon period;

a time offset in the beacon period;
a length of the beacon signal;
an identifier of the sending end; and
a transmission parameter.

Optionally, the beacon signal includes one of the following:

a first beacon signal including a 1st stage preamble and a 2nd stage preamble;
a second beacon signal including the 1st stage preamble, the 2nd stage preamble, and data information;
a third beacon signal including the 1st stage preamble; and
a fourth beacon signal including the 1st stage preamble and the data information.

Optionally, the first beacon signal carries a first part of the target information in the 1st stage preamble, and carries a second part of the target information in the 2nd stage preamble, and the first part does not overlap the second part.

Alternatively,
the second beacon signal carries the first part of the target information in the 1st stage preamble, carries the second part of the target information in the 2nd stage preamble, and carries a third part of the target information in the data information, and the first part, the second part, and the third part do not overlap each other.

Alternatively,
the third beacon signal carries the first part of the target information in the 1st stage preamble.

Alternatively,
the fourth beacon signal carries the first part of the target information in the 1st stage preamble, and carries the second part of the target information in the data information, and the first part does not overlap the second part.

According to the information receiving apparatus in embodiments of this application, through transmitting time information by the relative time information in the beacon signal, complexity of the information transmission can be reduced, difficulty in decoding the beacon signal can be reduced, a load of the beacon signal can be reduced, and signaling overheads of the beacon signal can be reduced.

The information receiving apparatus in embodiments of this application may be an electronic device, for example, an electronic device having an operating system, or may be a component in the electronic device, for example, an integrated circuit or a chip. The electronic device may be a terminal, or may be another device other than the terminal. In an example, the terminal may include but is not limited to the above listed types of the terminal 11, and the another device may be a server, a network attached storage (Network Attached Storage, NAS), or the like. This is not specifically limited in embodiments of this application.

The information receiving apparatus provided in embodiments of this application can implement all of the processes implemented in the method embodiment of FIG. 7, and achieve the same technical effects. To avoid repetition, details are not described herein.

Optionally, as shown in FIG. 10, an embodiment of this application further provides a communication device 500, including a processor 501 and a memory 502. The memory 502 stores a program or instructions executable in the processor 501. For example, when the communication device 500 is a sending end, the program or the instructions, when executed by the processor 501, implement the steps of the above embodiment of the information sending method, and can achieve the same technical effects. When the communication device 500 is a receiving end, the program or the instructions, when executed by the processor 501, implement the steps of the above embodiment of the information receiving method, and can achieve the same technical effects. To avoid repetition, details are not described herein.

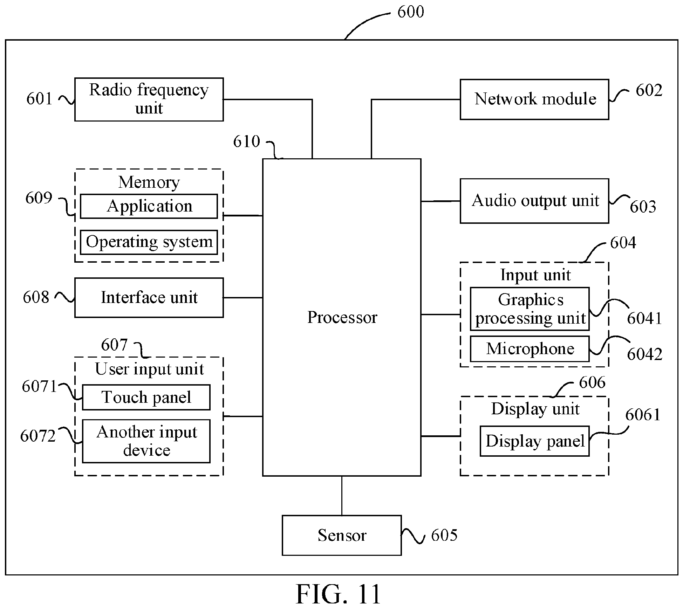

An embodiment of this application further provides a terminal, including a processor and a communication interface. The communication interface is configured to send a beacon signal. The beacon signal includes target information. The target information is used for indicating relative time information of the beacon signal. Alternatively, the communication interface is configured to receive a beacon signal. The beacon signal includes target information. The target information is used for indicating relative time information of the beacon signal. The terminal embodiment corresponds to the above method embodiment of the receiving end side or the sending end side. The implementation processes and manners of the above method embodiments are all applicable to the terminal embodiment, and the same technical effects can be achieved. Specifically, FIG. 11 is a schematic diagram of a hardware structure of a terminal for implementing an embodiment of this application.

The terminal 600 includes but is not limited to at least some of components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the terminal 600 may further include a power supply (such as a battery) that supplies power to the components. The power supply may be logically connected to the processor 610 through a power management system, thereby implementing functions such as management of charging, discharging, and power consumption through the power management system. The terminal structure shown in FIG. 11 constitutes no limitation on the terminal, and the terminal may include more or fewer components than those shown in the figure, or some merged components, or different component arrangements. Details are not described herein.

It should be noted that, in this embodiment of this application, the input unit 604 may include a graphics processing unit (Graphics Processing Unit, GPU) 6041 and a microphone 6042. The graphics processing unit 6041 processes image data of a static picture or a video obtained by an image capturing apparatus (for example, a camera) in a video capturing mode or an image capturing mode. The display unit 606 may include a display panel 6061. The display panel 6061 may be configured in a form such as a liquid crystal display or an organic light-emitting diode. The user input unit 607 includes at least one of a touch panel 6071 and another input device 6072. The touch panel 6071 is also referred to as a touch screen. The touch panel 6071 may include two parts: a touch detection apparatus and a touch controller. The another input device 6072 may include but is not limited to a physical keyboard, a function key (such as a volume control key and a power on/off key), a trackball, a mouse, and a joystick.

In this embodiment of this application, the radio frequency unit 601 receives downlink data from a network side device, and then may transmit the data to the processor 610 for processing. In addition, the radio frequency unit 601 may send uplink data to the network side device. Generally, the radio frequency unit 601 includes but is not limited to an antenna, an amplifier, a transceiver, a coupler, a low noise amplifier, and a duplexer.

The memory 609 may be configured to store a software program or instructions and various data. The memory 609 may mainly include a first storage area for storing programs or instructions and a second storage area for storing data. The first storage area may store an operating system, an application, or an instruction required for at least one function (such as a sound playback function and an image playback function), and the like. In addition, the memory 609 may include a volatile memory or a non-volatile memory, or the memory 609 may include both the volatile memory and the non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The non-volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, RAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 609 in this embodiment of this application includes but is not limited to the above and any other suitable types of memories.

The processor 610 may include one or more processing units. Optionally, an application processor and a modem processor are integrated in the processor 610. The application processor mainly processes operations related to an operating system, a user interface, an application, an instruction, and the like. The modem processor mainly processes a wireless communication signal, for example, may be a baseband processor. It may be understood that the modem processor may alternatively not be integrated in the processor 610.

When the terminal 600 serves as a sending end, the radio frequency unit 601 is configured to send a beacon signal.

The beacon signal includes target information. The target information is used for indicating relative time information of the beacon signal.

Optionally, the target information includes at least one of the following:

an identifier of the beacon signal in the beacon period; and
an identifier of the beacon period.

Optionally, the target information further includes at least one of the following:

a starting position of the beacon period;
a length of the beacon period;
a quantity of beacon signals included in the beacon period;
a time interval between adjacent beacon signals in the beacon period;
a time offset in the beacon period;
a length of the beacon signal;
an identifier of the sending end; and
a transmission parameter.

Optionally, the transmission parameter includes a data unit length of data information in the beacon signal.

Optionally, the beacon signal includes one of the following:

a first beacon signal including a $1^{st}$ stage preamble and a $2^{nd}$ stage preamble;
a second beacon signal including the $1^{st}$ stage preamble, the $2^{nd}$ stage preamble, and data information;
a third beacon signal including the $1^{st}$ stage preamble; and
a fourth beacon signal including the $1^{st}$ stage preamble and the data information.

Optionally, the first beacon signal, the second beacon signal, the third beacon signal, or the fourth beacon signal further includes a delimiter. The delimiter is arranged before the $1^{st}$ stage preamble.

Optionally, the first beacon signal carries a first part of the target information in the $1^{st}$ stage preamble, and carries a second part of the target information in the $2^{nd}$ stage preamble, and the first part does not overlap the second part.

Alternatively,
the second beacon signal carries the first part of the target information in the $1^{st}$ stage preamble, carries the second part of the target information in the $2^{nd}$ stage preamble, and carries a third part of the target information in the data information, and the first part, the second part, and the third part do not overlap each other.

Alternatively,
the third beacon signal carries the first part of the target information in the $1^{st}$ stage preamble.

Alternatively,
the fourth beacon signal carries the first part of the target information in the $1^{st}$ stage preamble, and carries the second part of the target information in the data information, and the first part does not overlap the second part.

In this implementation, the beacon signal is sent, where the beacon signal includes target information, and the target information is used for indicating relative time information of the beacon signal. Through transmitting time information by the relative time information in the beacon signal, complexity of the information transmission can be reduced, difficulty in decoding the beacon signal can be reduced, a load of the beacon signal can be reduced, and signaling overheads of the beacon signal can be reduced.

When the terminal 600 serves as a receiving end,
the radio frequency unit 601 is configured to receive a beacon signal.

The beacon signal includes target information. The target information is used for indicating relative time information of the beacon signal.

Optionally, the target information includes at least one of the following:

an identifier of the beacon signal in a beacon period; and
an identifier of the beacon period.

Optionally, the target information further includes at least one of the following:

a starting position of the beacon period;
a length of the beacon period;
a quantity of beacon signals included in the beacon period;
a time interval between adjacent beacon signals in the beacon period;
a time offset in the beacon period;
a length of the beacon signal;
an identifier of the sending end; and
a transmission parameter.

Optionally, the beacon signal includes one of the following:

a first beacon signal including a 1st stage preamble and a 2nd stage preamble;
a second beacon signal including the 1st stage preamble, the 2nd stage preamble, and data information;
a third beacon signal including the 1st stage preamble; and
a fourth beacon signal including the 1st stage preamble and the data information.

Optionally, the first beacon signal carries a first part of the target information in the 1st stage preamble, and carries a second part of the target information in the 2nd stage preamble, and the first part does not overlap the second part.

Alternatively,
the second beacon signal carries the first part of the target information in the 1st stage preamble, carries the second part of the target information in the 2nd stage preamble, and carries a third part of the target information t in the data information, and the first part, the second part, and the third part do not overlap each other.

Alternatively,
the third beacon signal carries the first part of the target information in the 1st stage preamble.

Alternatively,
the fourth beacon signal carries the first part of the target information in the 1st stage preamble, and carries the second part of the target information in the data information, and the first part does not overlap the second part.

In this implementation, the beacon signal is received, where the beacon signal includes target information, and the target information is used for indicating relative time information of the beacon signal. Through transmitting time information by the relative time information in the beacon signal, complexity of the information transmission can be reduced, difficulty in decoding the beacon signal can be reduced, a load of the beacon signal can be reduced, and signaling overheads of the beacon signal can be reduced.

An embodiment of this application further provides a network side device. The network side device includes a processor and a communication interface. The communication interface is configured to send a beacon signal. The beacon signal includes target information. The target information is used for indicating relative time information of the beacon signal. Alternatively, the communication interface is configured to receive a beacon signal. The beacon signal includes target information. The target information is used for indicating relative time information of the beacon signal. The network side device embodiment corresponds to the above method embodiment of the sending end or the receiving end. The implementation processes and manners of the above method embodiments are applicable to the network side device embodiment, and the same technical effects can be achieved.

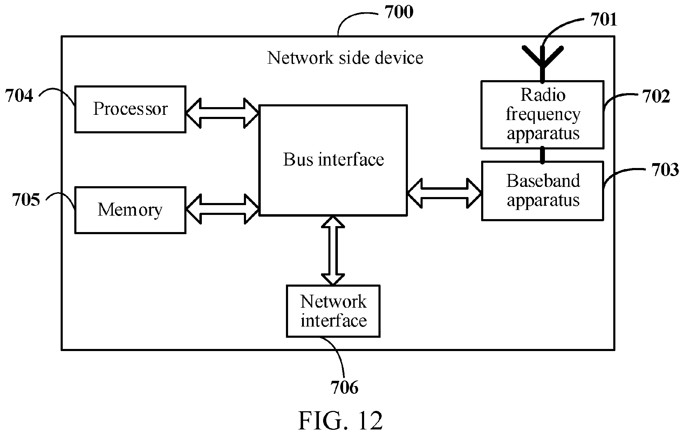

Specifically, an embodiment of this application further provides a network side device. As shown in FIG. 12, a network side device 700 includes an antenna 701, a radio frequency apparatus 702, a baseband apparatus 703, a processor 704, and a memory 705. The antenna 701 is connected to the radio frequency apparatus 702. In an uplink direction, the radio frequency apparatus 702 receives information through the antenna 701 and sends the received information to the baseband apparatus 703 for processing. In a downlink direction, the baseband apparatus 703 processes to-be-sent information, and sends the to-be-sent information to the radio frequency apparatus 702. The radio frequency apparatus 702 processes the received information, and then sends the information through the antenna 701.

The method in the above embodiment performed by the network side device may be implemented by the baseband apparatus 703. The baseband apparatus 703 includes a baseband processor.

The baseband apparatus 703 may include, for example, at least one baseband board. A plurality of chips are arranged on the baseband board, as shown in FIG. 12. One of the chips is, for example, a baseband processor, and is connected to the memory 705 through a bus interface to call a program in the memory 705 to perform the operations of the network device shown in the above method embodiment.

The network side device may further include a network interface 706. The interface is, for example, a common public radio interface (common public radio interface, CPRI).

Specifically, the network side device 700 in this embodiment of this application further includes instructions or a program stored in the memory 705 and executable in the processor 704. The processor 704 calls the instructions or the program in the memory 705 to perform the method performed by each module shown in FIG. 8 or FIG. 9, and to achieve the same technical effects. To avoid repetition, details are not described herein.

An embodiment of this application further provides a readable storage medium. The readable storage medium stores a program or instructions. The program or the instructions, when executed by a processor, implement the processes of the above embodiment of the information sending method or the information receiving method, and can achieve the same technical effects. To avoid repetition, details are not described herein.

The processor is a processor in the terminal described in the above embodiments. The readable storage medium includes a computer-readable storage medium, such as a computer read-only memory ROM, a random access memory RAM, a magnetic disk, or an optical disk.

An embodiment of this application further provides a chip. The chip includes a processor and a communication interface. The communication interface is coupled to the processor. The processor is configured to execute a program or instructions, to implement the processes of the above embodiment of the information sending method or the information receiving method, and can achieve the same technical effects. To avoid repetition, details are not described herein.

It should be understood that the chip in this embodiment of this application may also be referred to as a system level chip, a system chip, a chip system, a system on chip, or the like.

An embodiment of this application further provides a computer program/program product. The computer program/program product is stored in a storage medium. The computer program/program product is executed by at least one processor to implement the processes of the above embodiment of the information sending method or the information receiving method, and can achieve the same technical effects. To avoid repetition, details are not described herein.

An embodiment of this application further provides an information transceiving system. The information transceiving system includes: a sending end and a receiving end. The sending end may be configured to perform the steps of the above information sending method. The receiving end may be configured to perform the steps of the above information receiving method.

It should be noted that, the term "comprise", "include", or any other variant herein is intended to encompass non-exclusive inclusion, so that a process, a method, an article, or an apparatus including a series of elements not only includes those elements, but also includes another element not listed explicitly, or includes intrinsic elements for the process, the method, the article, or the apparatus. Without any further limitation, an element defined by the phrase "include one ..." does not exclude existence of additional same elements in the process, the method, the article, or the apparatus that includes the element. In addition, it should be noted that the scope of the method and the apparatus in implementations of this application is not limited to function execution in the order shown or discussed, and may further include function execution in a substantially simultaneous manner or in the opposite order based on the functions. For example, the described method may be performed in different order from the described order, and various steps may also be added, omitted, or combined. In addition, features described with reference to some examples may be combined in another example.

According to the descriptions of the above implementations, a person skilled in the art may clearly learn that the method in the above embodiments may be implemented by software using a necessary universal hardware platform, or may be implemented by hardware. However, in many cases, software using a necessary universal hardware platform is a preferred implementation. Based on such an understanding, the technical solutions of this application, in essence, or a part contributing to the prior art may be embodied in a form of a computer software product. The computer software product is stored in a storage medium (such as a ROM/RAM, a magnetic disk, or an optical disk), including a plurality of instructions for causing a terminal (which may be a mobile phone, a computer, a server, an air conditioner, a network device, or the like) to perform the methods in embodiments of this application.

Although embodiments of this application are described above with reference to the drawings, this application is not limited to the specific implementations described above. The above specific implementations are illustrative but not restrictive. With the enlightenment of this application, a person of ordinary skill in the art may make many forms without departing from the concept of this application and the protection scope of the claims. These forms fall within the protection of this application.

**Claims**

1. An information sending method, comprising:

   sending, by a sending end, a beacon signal, wherein
   the beacon signal comprises target information, and the target information is used for indicating relative time information of the beacon signal.

2. The method according to claim 1, wherein the target information comprises at least one of the following:

   an identifier of the beacon signal in a beacon period; and
   an identifier of the beacon period.

3. The method according to claim 2, wherein the target information further comprises at least one of the following:

   a starting position of the beacon period;
   a length of the beacon period;
   a quantity of beacon signals comprised in the beacon period;
   a time interval between adjacent beacon signals in the beacon period;
   a time offset in the beacon period;
   a length of the beacon signal;
   an identifier of the sending end; and
   a transmission parameter.

4. The method according to claim 3, wherein the transmission parameter comprises a data unit length of data information in the beacon signal.

5. The method according to claim 1, wherein the beacon signal comprises one of the following:

   a first beacon signal comprising a $1^{st}$ stage preamble and a $2^{nd}$ stage preamble;

a second beacon signal comprising the 1st stage preamble, the 2nd stage preamble, and data information;
a third beacon signal comprising the 1st stage preamble; and
a fourth beacon signal comprising the 1st stage preamble and the data information.

6. The method according to claim 5, wherein the first beacon signal, the second beacon signal, the third beacon signal, or the fourth beacon signal further comprises a delimiter, and the delimiter is arranged before the 1st stage preamble.

7. The method according to claim 5, wherein the first beacon signal carries a first part of the target information in the 1st stage preamble, and carries a second part of the target information in the 2nd stage preamble, and the first part does not overlap the second part;
or

the second beacon signal carries the first part of the target information in the 1st stage preamble, carries the second part of the target information in the 2nd stage preamble, and carries a third part of the target information in the data information, and the first part, the second part, and the third part do not overlap each other;
or
the third beacon signal carries the first part of the target information in the 1st stage preamble;
or
the fourth beacon signal carries the first part of the target information in the 1st stage preamble, and carries the second part of the target information in the data information, and the first part does not overlap the second part.

8. An information receiving method, comprising:

receiving, by a receiving end, a beacon signal, wherein
the beacon signal comprises target information, and the target information is used for indicating relative time information of the beacon signal.

9. The method according to claim 8, wherein the target information comprises at least one of the following:

an identifier of the beacon signal in a beacon period; and
an identifier of the beacon period.

10. The method according to claim 9, wherein the target information further comprises at least one of the following:

a starting position of the beacon period;
a length of the beacon period;
a quantity of beacon signals comprised in the beacon period;
a time interval between adjacent beacon signals in the beacon period;
a time offset in the beacon period;
a length of the beacon signal;
an identifier of the sending end; and
a transmission parameter.

11. The method according to claim 8, wherein the beacon signal comprises one of the following:

a first beacon signal comprising a 1st stage preamble and a 2nd stage preamble;
a second beacon signal comprising the 1st stage preamble, the 2nd stage preamble, and data information;
a third beacon signal comprising the 1st stage preamble; and
a fourth beacon signal comprising the 1st stage preamble and the data information.

12. The method according to claim 11, wherein the first beacon signal carries a first part of the target information in the 1st stage preamble, and carries a second part of the target information in the 2nd stage preamble, and the first part does not overlap the second part;
or

the second beacon signal carries the first part of the target information in the 1st stage preamble, carries the second part of the target information in the 2nd stage preamble, and carries a third part of the target information in the data information, and the first part, the second part, and the third part do not overlap each other;
or
the third beacon signal carries the first part of the target information in the 1st stage preamble;
or
the fourth beacon signal carries the first part of the target information in the 1st stage preamble, and carries the second part of the target information in the data information, and the first part does not overlap the second part.

13. An information sending apparatus, comprising:

a sending module, configured to send a beacon signal, wherein
the beacon signal comprises target information, and the target information is used for indicating relative time information of the beacon signal.

14. An information receiving apparatus, comprising:

a receiving module, configured to receive a beacon signal, wherein

the beacon signal comprises target information, and the target information is used for indicating relative time information of the beacon signal.

15. A sending end, comprising a processor and a memory, wherein the memory stores a program or instructions executable in the processor, and the program or the instructions, when executed by the processor, implement the steps of the information sending method according to any one of claims 1 to 7.

16. A receiving end, comprising a processor and a memory, wherein the memory stores a program or instructions executable in the processor, and the program or the instructions, when executed by the processor, implement the steps of the information receiving method according to any one of claims 8 to 12.

17. A readable storage medium, storing a program or instructions, wherein the program or the instructions, when executed by a processor, implement the steps of the information sending method according to any one of claims 1 to 7, or implement the steps of the information receiving method according to any one of claims 8 to 12.

18. A chip, comprising a processor and a communication interface, wherein the communication interface is coupled to the processor, and the processor is configured to execute a program or instructions, to implement the steps of the information sending method according to any one of claims 1 to 7, or implement the steps of the information receiving method according to any one of claims 8 to 12.

19. A computer program product, stored in a non-volatile storage medium, wherein the computer program product is executed by at least one processor to implement the steps of the information sending method according to any one of claims 1 to 7, or implement the steps of the information receiving method according to any one of claims 8 to 12.

Network
side device

Terminal

Terminal

FIG. 1

Start

A sending end sends a beacon signal, where the beacon signal includes target information, and the target information is used for indicating relative time information of the beacon signal

101

End

FIG. 2

**FIG. 3**

**FIG. 4**

| First structure | Preamble 1 | Preamble 2 | |
|---|---|---|---|
| Second structure | Preamble 1 | Preamble 2 | Data |
| Third structure | Preamble | | |
| Fourth structure | Preamble | | Data |

**FIG. 5**

| First structure | Delimiter | Preamble 1 | Preamble 2 | |
|---|---|---|---|---|

| Second structure | Delimiter | Preamble 1 | Preamble 2 | Data |
|---|---|---|---|---|

| Third structure | Delimiter | Preamble | |
|---|---|---|---|

| Fourth structure | Delimiter | Preamble | Data |
|---|---|---|---|

FIG. 6

Start

A receiving end receives a beacon signal, where the beacon signal includes target information, and the target information is used for indicating relative time information of the beacon signal — 201

End

FIG. 7

— 300

Information sending apparatus

Sending module — 301

FIG. 8

400

Information
receiving apparatus

Receiving
module — 401

FIG. 9

500

Communication device

501 — Processor ⟷ Memory — 502

FIG. 10

FIG. 11

FIG. 12

<div align="center">**INTERNATIONAL SEARCH REPORT**</div>

| International application No. |
|---|
| **PCT/CN2023/082123** |

| A. | CLASSIFICATION OF SUBJECT MATTER |
|---|---|

H04W56/00(2009.01)i

According to International Patent Classification (IPC) or to both national classification and IPC

| B. | FIELDS SEARCHED |
|---|---|

Minimum documentation searched (classification system followed by classification symbols)

IPC:H04W,H04Q,H04L,H04B

Documentation searched other than minimum documentation to the extent that such documents are included in the fields searched

Electronic data base consulted during the international search (name of data base and, where practicable, search terms used)

CNABS, CNTXT, CJFD, 3GPP; ENTXT, VEN: 信标, 时间, 目标, 周期, 前导码; beacon, time, period, target, preamble

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2014140208 A1 (QUALCOMM INC.) 22 May 2014 (2014-05-22) description, paragraphs [0031]-[0136], and figures 1-13 | 1-6, 8-11, 13-19 |
| X | CN 108632829 A (ZTE CORP.) 09 October 2018 (2018-10-09) description, paragraphs 0039-0172, and figures 1-12 | 1-6, 8-11, 13-19 |
| A | CN 101557632 A (SONY CORPORATION) 14 October 2009 (2009-10-14) entire document | 1-19 |
| A | WO 2018203979 A1 (INTEL CORP.) 08 November 2018 (2018-11-08) entire document | 1-19 |
| A | MEDIA TEK INC. ""R1-1609328_Definition of a Downlink Basic Beacon Unit in the Unified Framework for NR Initial Access"" *3GPP tsg_ran\WG1_RL1*, 01 October 2016 (2016-10-01), entire document | 1-19 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 June 2023** | **15 June 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/082123**

| Patent document cited in search report | | | Publication date (day/month/year) | Patent family member(s) | | | Publication date (day/month/year) |
|---|---|---|---|---|---|---|---|
| US | 2014140208 | A1 | 22 May 2014 | US | 9544811 | B2 | 10 January 2017 |
| CN | 108632829 | A | 09 October 2018 | US | 2018279209 | A1 | 27 September 2018 |
| | | | | US | 11153808 | B2 | 19 October 2021 |
| CN | 101557632 | A | 14 October 2009 | JP | 2009253672 | A | 29 October 2009 |
| | | | | JP | 4596031 | B2 | 08 December 2010 |
| | | | | US | 2009252244 | A1 | 08 October 2009 |
| | | | | US | 8457223 | B2 | 04 June 2013 |
| WO | 2018203979 | A1 | 08 November 2018 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210283848